# EUROPEAN PATENT APPLICATION

(11) **EP 1 261 191 A1**
(43) Date of publication of application: **27.11.2002**
(21) Application number: 01908171.0
(22) Date of filing: 28.02.2001
(51) Int. Cl.: H04M 11/02

(54) **DATA TRANSMISSION SYSTEM, SERVER USED FOR THE DATA TRANSMISSION SYSTEM, AND TERMINAL ADAPTER**

(30) Priority: 29.02.2000 JP 2000054805
(71) Applicant: Sharp Kabushiki Kaisha, Osaka-shi, Osaka 545-8522 (JP)
(72) Inventor: TACHI, Yorihito, Ikoma-shi, Nara 630-0213 (JP); SHIMA, Yasushi, Sakai-shi, Osaka 591-8005 (JP); YOSHIKAWA, Shuichi, Nara-shi, Nara 631-0031 (JP); TANAKA, Junji, Sakurai-shi, Nara 633-0074 (JP)
(74) Representative: Müller, Frithjof E., Dipl.-Ing.
(86) International application number: JP0101534
(87) International publication number: WO01065824

(57) **Abstract**

A data transfer system of the present invention includes a server and a terminal adapter capable of mutually transferring data to each other; the server accesses the terminal adapter at a prescribed dialing time, and determines an instruction for sending first data to the terminal adapter and an instruction for receiving second data from the terminal adapter so as to send the first data to the terminal adapter and receive the second data from the terminal adapter.

## Description

### TECHNICAL FIELD

The present invention relates to a data transfer system, including a server and at least one terminal adapter interconnected to the server through a network and performing interactive data transfer, and to the server and the terminal adapter for use in the data transfer system.

### BACKGROUND ART

With the spread of the Internet, a variety of data transfer techniques using the Internet have been developed. For example, Japanese Laid-Open Publication No. 11-146011 discloses a configuration of a data transfer system in which an electronic mail (hereinafter, referred to as "e-mail") is automatically distributed to a destination address thereof when an e-mail server receives the e-mail.

In the configuration of the data transfer system disclosed by Japanese Laid-Open Publication No. 11-146011, although an e-mail is automatically distributed from an e-mail server to a communication terminal, a user sending an e-mail is personally required to perform a transmission operation, such as a dial-up operation, etc., in order to send the e-mail to the e-mail server. Since the users can arbitrarily send e-mails, there is a possibility that the sending of e-mails may be concentrated in the e-mail server over a certain period of time.

Japanese Laid-Open Publication No. 4-124938 discloses a data transfer technique using polling.

In the configuration of the data transfer system disclosed by Japanese Laid-Open Publication No. 4-124938, a user is personally required to perform a transmission operation such as a dial-up operation, etc.

In the case where a terminal adapter is installed within a home and connected to a telephone line, an installation of the terminal adapter is limited to within reach of a telephone wire. Therefore, when the user uses the data transfer system, the user is required to take the trouble to go to a place where the terminal adapter is installed. In addition, it is inconvenient for the user to check whether the terminal adapter has received information, or for a child or an aged person to operate the terminal adapter.

The present invention solves the above-described problems and an objective thereof is to provide: a data transfer system which does not require any specific operations for transferring data when sending/receiving data, and is capable of preventing data traffic from being concentrated; and a server and a terminal adapter which are used in the data transfer system.

### DISCLOSURE OF THE INVENTION

A data transfer system according to the present invention includes a server and a terminal adapter capable of mutually transferring data to each other, in which the server accesses the terminal adapter at a prescribed dialing time, and determines an instruction for sending first data to the terminal adapter and an instruction for receiving second data from the terminal adapter so as to send the first data to the terminal adapter and receive the second data from the terminal adapter, thereby achieving the above-described objective.

The data transfer system may allow a recording medium to be mountable thereon, and the instruction for sending the first data and the instruction for receiving the second data may be issued based on whether the recording medium is mounted on the data transfer system or not.

The dialing time may be preset based on a data traffic of the server.

A data transfer system according to the present invention includes a server and a plurality of terminal adapters capable of transferring data to each other, in which the server accesses each of the plurality of terminal adapters at a different dialing time preset for each of the plurality of terminal adapters, and determines an instruction for sending first data to each of the plurality of terminal adapters and an instruction for receiving second data from each of the plurality of terminal adapters so as to send the first data to each of the plurality of terminal adapters and receive the second data from each of the terminal adapters, thereby achieving the above-described objective.

A data transfer system according to the present invention includes a server and a terminal adapter capable of mutually transferring data to each other, in which the terminal adapter accesses the server at a preset dialing time, and determines an instruction for sending first data to the server and an instruction for receiving second data from the server so as to send the first data to the server and receive the second data from the server, thereby achieving the above-described objective.

The terminal adapter may have a wireless communication function, and determines, through the wireless communication, an instruction for sending first data to the server and an instruction for receiving second data from the server so as to send the first data to the server and receive the second data from the server.

A terminal adapter according to the present invention is capable of mutually transferring data to and from a server and allowing a recording medium to be mountable thereon, wherein the terminal adapter accesses the server at a preset dialing time based on whether the recording medium is mounted on the terminal adapter or not, and determines an instruction for sending first data to the server and an instruction for receiving second data from the server so as to send the first data to the server and receive the second data from the server, thereby achieving the above-described objective.

The terminal adapter may have a wireless communication function, and determines, through the wireless communication, an instruction for sending first data to the server and an instruction for receiving second data from the server so as to send the first data to the server and receive the second data from the server.

A dialing time and an address of the server may be preset in the terminal adapter, and the terminal adapter may access the server based on the preset dialing time and the preset address of the server.

A dialing time and an address of the server may be preset in the recording medium, and the terminal adapter may access the server based on the preset dialing time and the preset address of the server.

The dialing time may be preset by accessing the server.

An address of the server may be preset so that the terminal adapter automatically accesses the server in which the dialing time is preset.

A server according to the present invention is capable of mutually transferring data to and from a terminal adapter, in which the server accesses the terminal adapter at a preset dialing time, and determines an instruction for sending first data to the terminal adapter and an instruction for receiving second data from the terminal adapter so as to send the first data to the terminal adapter and receive the second data from the terminal adapter.

### BRIEF DESCRIPTION OF THE DRAWINGS

Figure **1** illustrates a configuration of a data transfer system **100** according to Example 1 of the present invention.
Figure **2** illustrates the configuration of the data transfer system **100** according to Example 1 of the present invention in more detail.
Figure **3** is a flowchart illustrating operations performed by a server **110** of the data transfer system **100** for center polling.
Figure **4** is a flowchart illustrating operations by a terminal adapter **120** of the data transfer system **100** performed for the center polling.
Figure **5** illustrates a configuration of a data transfer system **200** according to Example 2 of the present invention.
Figure **6** is a flowchart illustrating operations performed by a terminal adapter **220** of the data transfer system **200** for a dialing time schedule registration.
Figure **7** is a flowchart illustrating operations performed by a server **210** of the data transfer system **200** for the dialing time schedule registration.
Figure **8** is a flowchart illustrating operations performed by the terminal adapter **220** of the data transfer system **200** for data transfer.
Figure **9** is a flowchart illustrating operations performed by the server **210** of the data transfer system **200** for the data transfer.
Figure **10** illustrates a data transfer system **300** according to Example 3 of the present invention.
Figure **11** is a flowchart illustrating operations performed by a wireless terminal adapter **327** of the data transfer system **300** for the data transfer.

### BEST MODE FOR CARRYING OUT THE INVENTION

Hereinafter, embodiments of the present invention will be described with reference to drawings.

### (Example 1)

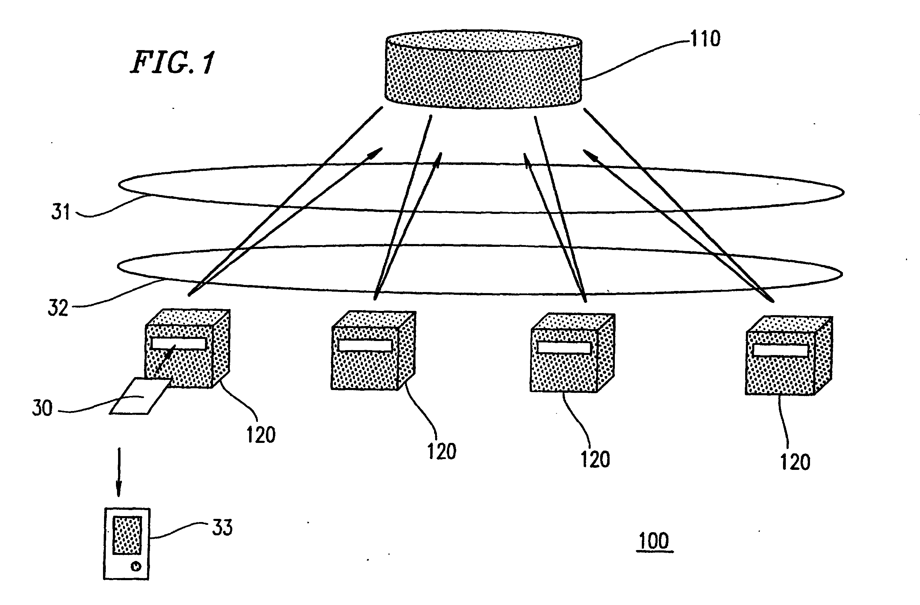

Figure **1** illustrates a configuration of a data transfer system **100** according to Example 1 of the present invention. The data transfer system **100** includes a server **110** and at least one terminal adapter (TA) **120** (four are shown in Figure **1**) interconnected to the server **110** through the Internet **31** and a telephone line **32**. The server **110** is, for example, provided for a collection and delivery center which performs collection and delivery of data. Each terminal adapter **120** is provided for a home or the like and is connected to the Internet **31** through the telephone line **32**. The terminal adapter **120** has a removable recording medium **30,** such as a memory cartridge, a memory card, or the like. The removable recording media **30** can be used with a data input/output device **33** having a data input/output function. The data input/output device **33** can be, for example, a portable game machine, an audio or visual device, an information communication device, or an interactive remote control.

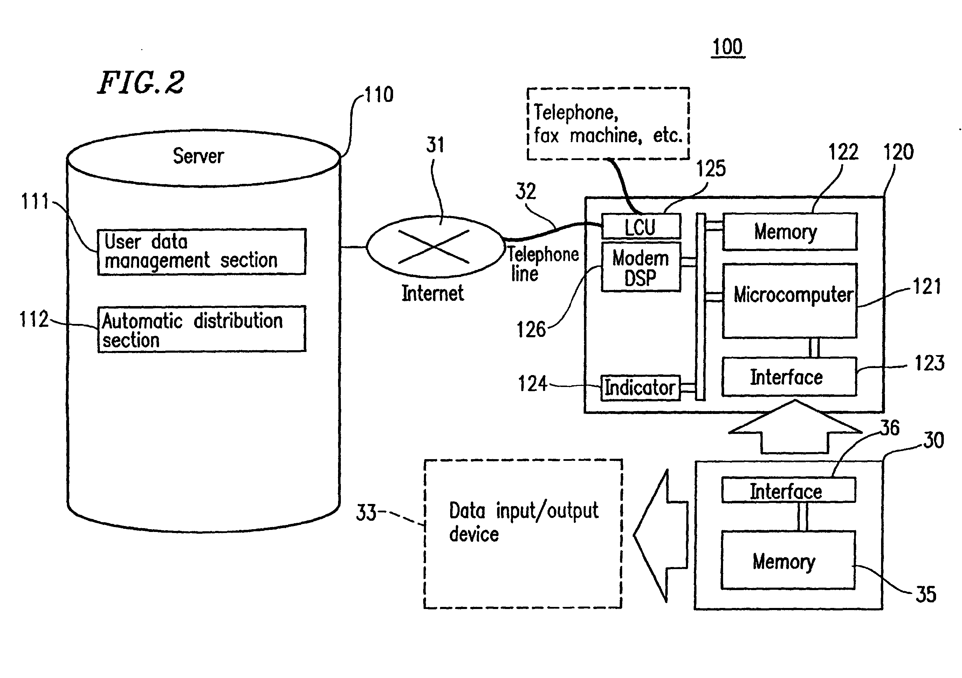

Figure **2** illustrates the configuration of the data transfer system **100** according to Example 1 of the present invention in more detail. The server **110** has a user data management section **111** and an automatic distribution section **112.** The user data management section **111** manages, for example, a telephone number of the telephone line **32** which is an address of each terminal adapter **120** (only one is shown in Figure **2** for convenience) connected to the server **110** through the Internet **31** and the telephone line **32;** and/or a user ID for use in identification of a user of the terminal adapter **120**. The automatic distribution section **112** automatically distributes data to each terminal adapter **120** based on a schedule of preset dialing times.

The terminal adapter **120** includes a microcomputer **121,** a memory **122,** an interface **123,** an indicator **124,** an LCU **125,** and a modem (DSP) **126.**

The microcomputer **121** controls the memory **122,** the interface **123,** the indicator **124** and the modem **126.**

The memory **122** stores, for example, data pertaining to a user ID for specifying a user who uses the terminal adapter **120**.

The interface **123** is provided for connecting the terminal adapter **120** to the recording media **30.**

The indicator **124** is, for example, an LED which indicates that data has been sent from the server **110** to the terminal adapter **120** when lit.

The LCU **125** can be connected to a telephone, a fax machine, etc.

The modem **126** is connected to the telephone line **32** through the LCU **125**.

The recording media **30** includes an interface **36** and a memory **35** for storing data.

The interface **36** is connected to the interface **123** of the terminal adapter **120**. The memory **35** is connected to the interface **36**.

The terminal adapter **120** detects that the recording media **30** is mounted thereon. For example, when the recording medium **30** is mounted on the terminal adapter **20** and the interface **36** is electrically connected to the interface **123**, a prescribed signal is output to the microcomputer **121.** Alternatively, the terminal adapter **120** may output the prescribed signal to the microcomputer **121** when the mounting of the recording medium **30** is mechanically detected.

Hereinafter, center polling which is performed by the server **110** to the terminal adapters **120** in the data transfer system **100** having the above configuration will be described.

In the data transfer system **100** according to Example 1 of the present invention, the terminal adapter **120** detects the mounting and dismounting of the recording medium **30** and transfers data between the server **110** and the terminal adapter **120**.

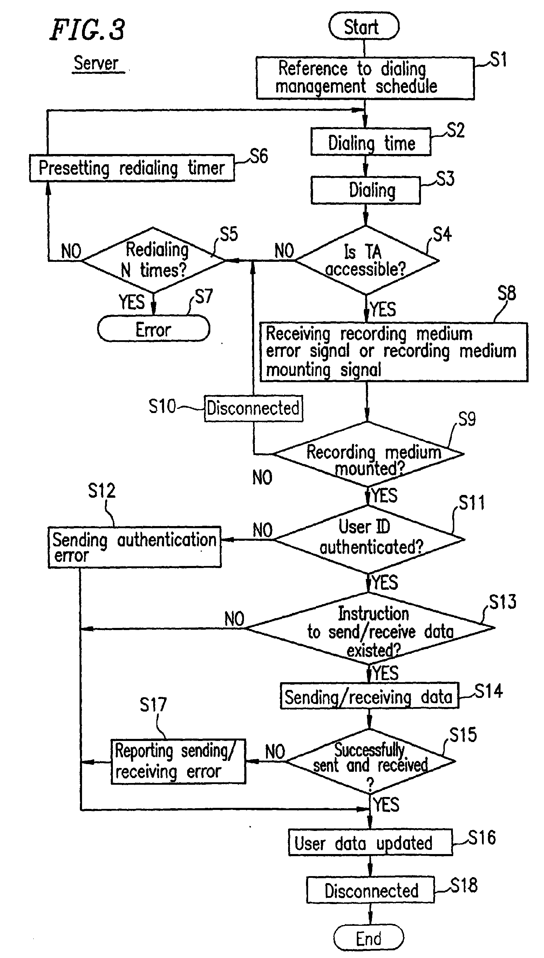

Figure **3** illustrates operations performed by the server **110** of the data transfer system **100** for the center polling. The server **110** performs steps S1-S18 of Figure **3**.

The server **110** makes reference to a dialing management time schedule provided to the automatic distribution section **112** (step S1). When a dialing time which is preset in the dialing management time schedule occurs (step S2). the server **110** automatically dials a telephone number which is an address of a terminal adapter **120** in order to access the terminal adapter **120** (step S3).

The telephone number for accessing the terminal adapter **120** is pre-registered with the server **110** as an ID specific to the recording medium **30** which is mounted on the terminal adapter **120**.

The server **110** determines whether or not the prescribed terminal adapter (TA) **120** is accessible (step S4). If it is not accessible, the server **110** redials the telephone number corresponding to the terminal adapter **120** prescribed number (N) of times so as to access the terminal adapter **120** (step S5). For redialing the telephone number, the time interval for redialing may be arbitrarily preset with a timer (step S6). In such a case, when a preset redialing time occurs (step S2), the telephone number is redialed (step S3). When the server **110** cannot access the prescribed terminal adapter **120** after repeating the redialing N times, the server **110** recognizes an error and ends the control of redialing. (step S7).

When the server **110** receives a recording medium mounting signal from the terminal adapter **120** (step S8), the server **110** determines whether or not the recording medium **30** is mounted on the terminal adapter **120** (step S9). When the server **110** receives a recording medium error signal from the terminal adapter **120** (step S8), the server **110** determines that the recording medium **30** is not mounted on the terminal adapter **120** (step S9). When it is determined that the recording medium **30** is not mounted on the terminal adapter **120,** the server **110** disconnects the terminal adapter **120** from the telephone line (step S5), and thereafter, the server **110** redials the telephone number of the terminal adapter **120** N times (step S5).

When the server **110** determines that the recording medium **30** is mounted on the terminal adapter **120** (step S9), the server **110** performs authentication of a user ID in the case where the terminal adapter **120** has a user ID (step S11).

When the user ID of the terminal adapter **120** is not identical to the user ID which is pre-registered with the user data management section **111** of the server **110,** the server **110** sends an authentication error to the terminal adapter **120** (step S12). The server **110** updates the user data managed by the user data management section **111** and records the time of access to the prescribed terminal adapter **120,** a failure in an user ID authentication and the like (step S16).

When the user ID of the terminal adapter **120** is authenticated, the server **110** determines: (i) whether or not there is an instruction in the server **110** for sending data to the terminal adapter **120;** and (ii) whether or not there is an instruction in the terminal adapter **120** for sending data to the server **110** (step S13). When the server **110** has data to be sent to the terminal adapter **120,** the server **110** sends the data to the terminal adapter **120.** When the terminal adapter **120** has data to be sent to the server **110,** the terminal adapter **120** sends the data to the server **110** (step S14).

Thereafter, the server **110** determines that the data is successfully sent and received (step S15). The server **110** updates the user data managed by the user data management section **111** and records the time of access to the prescribed terminal adapter **120**, a success in sending and/or receiving (hereinafter, indicated as "sending/receiving") of data and the like (step S16).

When the data is not successfully sent or received, the server **110** reports to the terminal adapter **120** of a sending/receiving error (step S17). The server **110** updates the user data managed by the user data management section **111** and records the time of access to the prescribed terminal adapter **120,** or an error in sending/receiving of data (step S16).

When the user data which is recorded by the user data management section **111** is updated, the server **110** disconnects the terminal adapter **120** from the telephone line **32** so as to end the control operation (step S18).

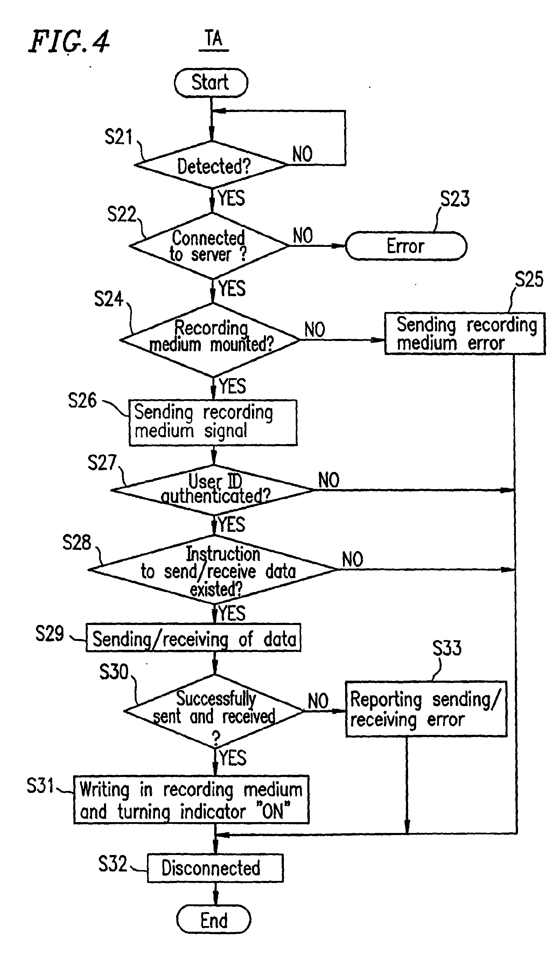

Figure **4** illustrates operations performed by the terminal adapter **120** of the data transfer system **100** for the center polling.

When the server **110** accesses a prescribed terminal adapter **120,** the terminal adapter **120** performs the steps S21 to S33 shown in Figure **4.**

When the terminal adapter **120** detects the dialing of a telephone number from the server **110** (step S21), the terminal adapter **120** determines whether or not the server **110** is connected thereto (step S22). When the terminal adapter **120** is not connected to the server **110**, the terminal adapter **120** ends the control operation (step S23).

When it is determined that the terminal adapter **120** is connected to the server **110**, the terminal adapter **120** determines whether or not the recording medium **30** is mounted on the terminal adapter **120** (step S24). When the recording medium **30** is not mounted on the terminal adapter **120,** the terminal adapter **120** sends a recording medium error signal to the server **110** (step S25), and the terminal adapter **120** is kept on hold until the server **110** disconnects itself from the telephone line **32.**

When the recording medium **30** is mounted on the terminal adapter **120,** the terminal adapter **120** sends to the server **110** a recording medium mounting signal which indicates that the recording medium **30** is mounted (step S26).

The terminal adapter **120** determines whether or not the user ID is authenticated depending on whether an authentication error is sent from the server **110** or not (step S27). When the terminal adapter **120** authenticates the user ID, the terminal adapter **120** determines: (i) whether or not there is an instruction in the memory **35** of the recording medium **30** for sending data to the server **110;** and (ii) whether or not there is an instruction in the server **110** for sending data to the terminal adapter **120** (step S28).

When there is data in the memory **35** of the recording medium **30** to be sent to the server **110,** the terminal adapter **120** reads the data from the memory **35** of the recording medium **30** and sends it to the server **110.** When there is data in the server **110** to be sent to the terminal adapter **120,** the terminal adapter **120** receives the data from the server **110** (step S29).

Thereafter, the terminal adapter **120** determines that sending/receiving of the data is successfully performed (step S30), the terminal adapter **120** writes the received data in the memory **35** of the recording medium **30** and turns on the indicator **124** (step S31). Next, the terminal adapter **120** is disconnected from the telephone line **32** by the server **110** (step S32).

When the data is not successfully sent or received, the terminal adapter **120** reports the sending/receiving error to the server **110** (step S33). After the user data is updated by the server **110** (step S16 of Figure **3**), the terminal adapter **120** is disconnected from the telephone line **32** by the server **110** (step S32).

When the indicator **124** of the terminal adapter **120** is on, a user of the terminal adapter **120** can determine that the data has already been sent from the server **110**. When the user determines that data has already been sent from the server **110,** the user mounts the recording medium **30,** which is removed from the terminal adapter **120,** on the input/output device **33** so as to read the data stored on the memory **35** which was sent from the server **110.**

For sending the data stored in the input/output device **33** to the server **110,** the user mounts the recording medium **30** on the input/output device **33** so as to write the data of the input/output device **33** in the memory **35** of the record medium **30.** Next, the user mounts the recording medium **30** on the terminal adapter **120.** When the data is sent from the server **110** to the terminal adapter **120** at a dialing time, the server **110** reads the data of the input/output device **33** from the memory **35** of the recording medium **30** mounted on the terminal adapter **120** and receives the data of the input/output device **30** from the terminal adapter **120**.

Accordingly, in either case, the sending/receiving of data is only instructed by mounting the recording medium **30** on the terminal adapter **120**. Therefore, the data is automatically sent and received between the server **110** and the terminal adapter **120** without requiring a user's operation of connecting the terminal adapter **120** to the telephone line **32.**

In Example 1, the dialing management time schedule which is provided in the user data management section **111** of the server **110** is appropriately changed at a prescribed time, e.g., each week, each month, etc. The dialing management time schedule may be changed based on the user data recorded in the user data management section **111,** such that a dialing time for each of the terminal adapters **120** can be spread in a time slot when data traffic to and from the server **110** is low. When the dialing times to the terminal adapters **120** are spread, the traffic to and from the server **110** is spread when sending and receiving data. When the dialing time is set in a time slot when charges for use of the telephone line **32** are low, telephone charges to the user can be decreased.

The data which can be sent from the server **110** to the terminal adapters **120** is not limited to any specific data. For example, when the recording medium **30** is an exclusive cartridge for a portable computer game provided as the data input/output device **33**, data regarding contents of the portable computer game is sent. A variety of data may be sent depending on the age group, favorites, or the like of the user.

For example, when the user of the portable computer game mounts the game cartridge provided as the recording medium **30** on the terminal adapter **120**, the server **110** may recognize that the recording medium **30**, which is mounted on the terminal adapter **120**, is the game cartridge, and may send data regarding characters of the game, data regarding the game, or the like. In such a case, the sent data is stored in the game cartridge.

Moreover, the server **110** may be an e-mail server over the Internet.

For example, in the case where a plurality of terminal adapters **120** are connected to an e-mail server as the server **110,** when the recording medium **30** storing a prescribed e-mail address and e-mail is mounted on one of the terminal adapters **120**, the server **110** reads the e-mail address and sends an e-mail to the terminal adapter **120** associated with the e-mail address. In such a case, a recording medium **30** is required to be mounted on the terminal adapter **120** to which the mail is sent.

Moreover, a message can be sent from the server **110** to a designated terminal adapter **120** based on the pre-registered user data. For example, in the case where a birthday of the user is registered with the server **110,** when a message for the birthday is preset to be sent from the server **110** to the terminal adapter **120** of the user, the birthday message is sent to the terminal adapter **120** on the user's birthday. The message is recorded on the recording medium **30** mounted on the terminal adapter **120** of the user.

### (Example 2)

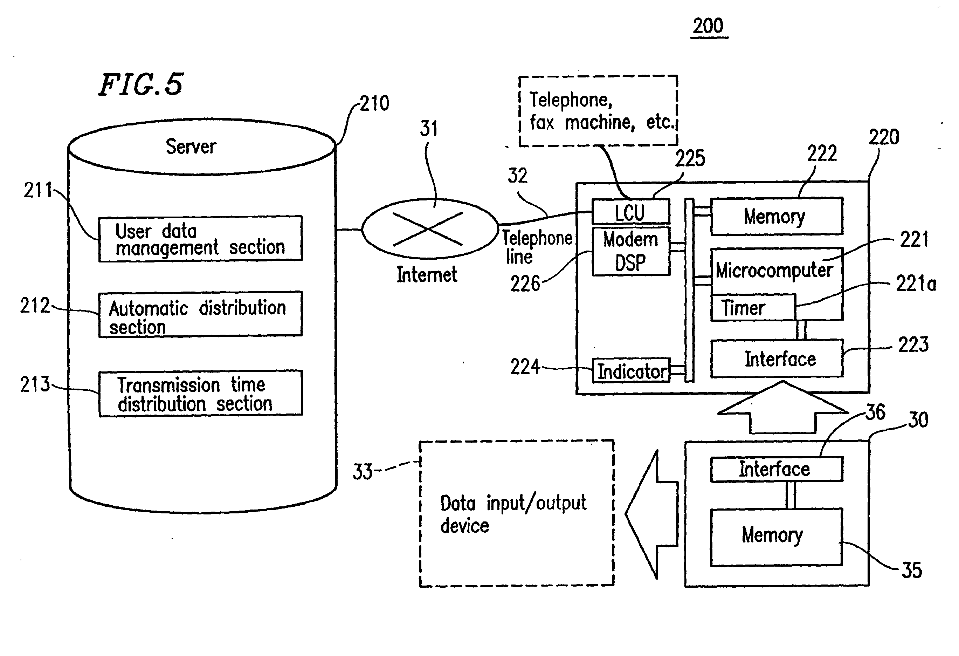

Figure **5** illustrates a configuration of a data transfer system **200** according to Example 2 of the present invention.

A configuration of the server **210** is the same as that of the server **110** of Example 1 except that a dialing time distribution section **213** is provided in the server **210**.

The dialing time distribution section **213** allocates a dialing time when each terminal adapter **220** transmits data to each terminal adapter **220**.

A configuration of the terminal adapter **220** is the same as that of the terminal adapter **120** of Example 1 except that a timer **221a** is provided within a microcomputer **221** of the terminal adapter **220**.

A configuration of the recording medium **30** is the same as that of the recording medium **30** of Example 1.

Hereinafter, an automatic dialing to the server **210** performed by the terminal adapters **220** in the data transfer system **200** having such a configuration will be described.

In the data transfer system **200** according to Example 2 of the present invention, when the terminal adapter **220** initially accesses the server **210**, the dialing time schedule is sent from the server **210** to the terminal adapter **220** so as to be registered therewith. After the dialing time schedule is registered, data is transferred between the server **210** and the terminal adapter **220**.

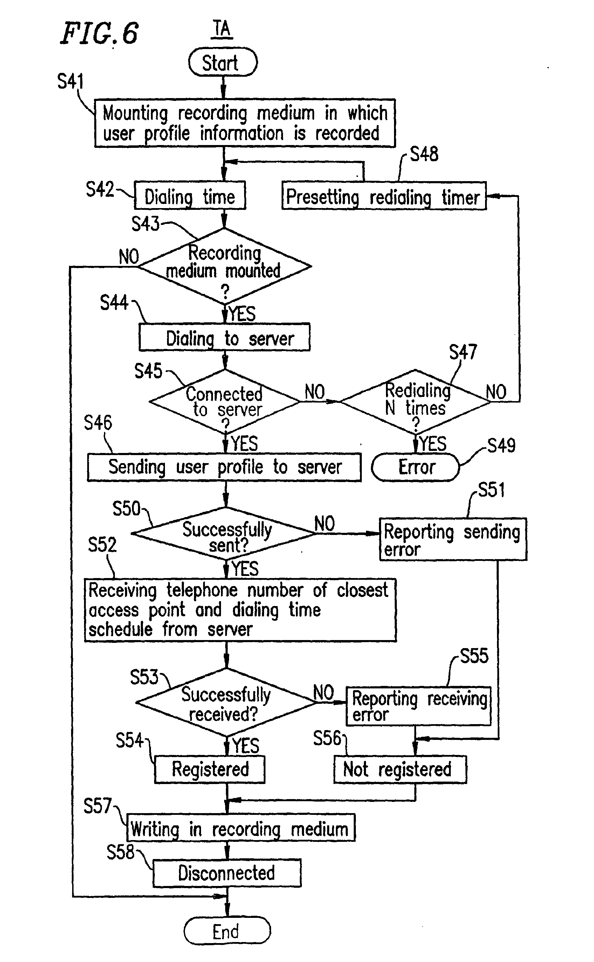

Figure **6** illustrates operations performed by the terminal adapter **220** of the data transfer system **200** for the dialing time schedule registration. The terminal adapter **220** performs steps S41-S58.

In the memory **222** of the terminal adapter **220**, a dialing time at which the terminal adapter **220** is to access a prescribed server **210** is preset. For accessing the server **210**, the user pre-records user profile data on the recording medium **30** to be mounted on the terminal adapter **220.** The user profile data includes, for example, a name, age and telephone number of the user, and other data associated with attributes of the user. As already mentioned, the server **210** has a pre-registered user ID which is specific to the recording medium **30** to be mounted on the terminal adapter **220**.

A user mounts the recording medium **30** storing user profile information on the terminal adapter **220** (step S41). When the preset prescribed dialing time occurs (step S42), the terminal adapter **220** determines whether or not the recording medium **30** registering the user profile data therewith is mounted thereon (step S43). When the terminal adapter **220** is not mounted, the terminal adapter **220** ends the control operation.

When the terminal adapter **220** determines that the recording medium **30** is mounted thereon (step S43), the terminal adapter **220** automatically accesses the telephone line **32** connected to the prescribed server **210** (step S44). The telephone number of the telephone line **32** has been registered at the time of shipping or sale of the terminal adapter **220**.

When the terminal adapter **220** determines that the server **210** is connected thereto (step S45), the user profile data recorded on the recording medium **30** is sent to the server **210** along with the user ID (step S46).

When the terminal adapter **220** cannot access the server **210** (step S45), the terminal adapter **220** redials the telephone number corresponding to the terminal adapter **220** a prescribed number (N) of times so as to access the server **210** (step S47). For redialing the telephone number, a time interval for redialing may be arbitrarily preset with a timer (step S48). In such a case, when a preset dialing time occurs (step S42), the terminal adapter **220** determines whether or not the recording medium **30** is mounted thereon (step S43), if it is mounted, the telephone number is redialed. When access to the terminal adapter **220** can not access the server **210** after repeating the redialing N times, the terminal adapter **220** recognizes an access error and ends the control of the terminal adapter **220** (step S49).

When the user profile data recorded on the recording medium **30** is sent to the server **210** along with the user ID (step S46), the terminal adapter **220** determines whether or not the user profile data is successfully sent to the server **210** (step S50). When the user profile data is not successfully sent, the terminal adapter **220** reports a sending error to the server **210** (step S51). When the sending error is reported to the server **210**, the server **210** records for each user ID that the telephone number of the access point and the dialing time schedule are not registered with the terminal adapter **220** (step S56). Moreover, the server **210** records for each user ID that the telephone number of the access point and the dialing time schedule are not registered with the memory **35** of the recording medium **30** (step S57).

The following is not illustrated in Figure **6**. When the server **210** performs the authentication of the user ID which is sent thereto and the sent user ID is not identical to the pre-registered user ID, the server **210** reports an authentication error to the terminal adapter **220** and records for each user ID that the telephone number of the access point and the dialing time schedule are not registered with the terminal adapter **220** or with the memory **35** of the recording medium **30.**

Referring again to Figure **6,** when the user profile data is successfully sent, the terminal adapter **220** receives the telephone number of the closest access point and dialing time schedule which are sent from the server **210** (step S52). The terminal adapter **220** determines whether or not the telephone number of the closest access point and dialing time schedule are successfully received (step S53). When the data is successfully received, the terminal adapter **220** registers the telephone number of the access point and the dialing time schedule with the memory **222** of the terminal adapter **220** (step S54). The terminal adapter **220** writes the telephone number of the access point and the dialing time schedule in the memory **35** of the recording medium **30** mounted thereon (step S57).

When the telephone number of the closest access point and the dialing time schedule sent from the server **210** are not successfully received, the terminal adapter **220** reports an error to the server **210** (step S55), and records on the corresponding memory **222** that the telephone number of the access point and the dialing time schedule are not registered (step S56). Next, the terminal adapter **220** writes in the memory **35** of the recording medium **30** mounted thereon that registration is incomplete (step S57). Thereafter, the terminal adapter **220** disconnects itself from the telephone line (step S58).

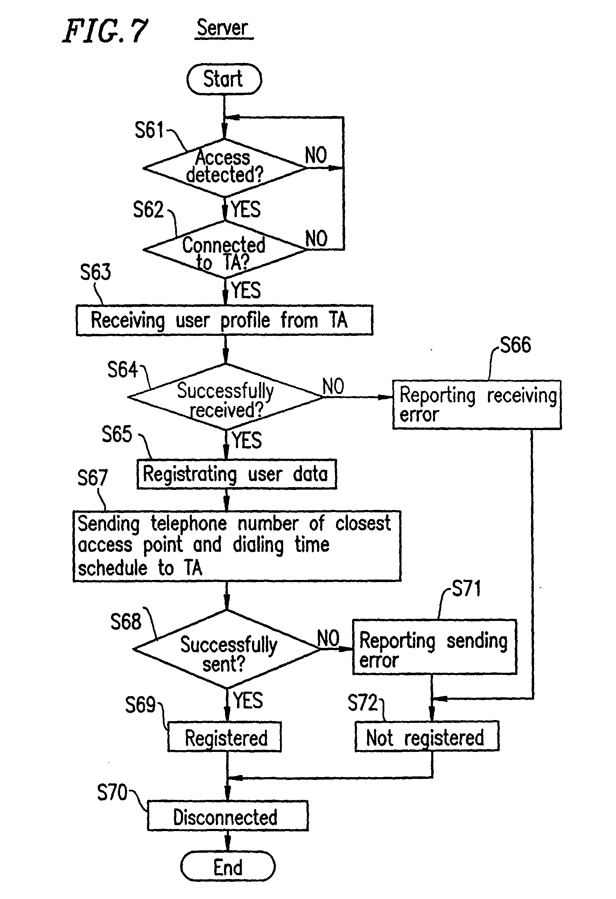

Figure **7** illustrates operations performed by the server **210** of the data transfer system **200** for the dialing time schedule registration. The server **210** performs steps S61-S72.

When access from the terminal adapter **220** is detected (step 61), the server **210** determines that the terminal adapter **220** is connected thereto through the telephone line **32** (step S62), and receives the user profile data sent from the terminal adapter **220** (step S63).

Thereafter, the server **210** determines whether or not the user profile data is successfully received by the server **210** (step S64). When the user profile data is successfully received, the server **210** registers the received user profile data for each user ID which is pre-registered with the user data management section **211** (step S65). When the user profile data is not successfully received, the server **210** reports a receiving error to the terminal adapter **220** (step S66).

When the user profile data is registered with the user data management section **211** (step S65), the server **210** sends to the terminal adapter **220** the telephone number provided as an address for accessing a server **210** closest to the terminal adapter **220**. At the same time, the server **210** selects an appropriate dialing time which is preset by the dialing time schedule management section **213** and sends it to the terminal adapter **220** (step S67). When the server **210** determines that the data is successfully sent to the terminal adapter **220** (step S68), the telephone number and dialing time schedule which is sent to the terminal adapter **220** are registered for each user ID which is pre-registered with the user data management section **211** (step S69). Thereafter, the server **210** disconnects itself from the telephone line (step S70).

When the telephone number of the closest access point and the dialing time schedule are not successfully sent to the terminal adapter **220** (step S68), a sending error is reported to the terminal adapter **220** (step S71), and the user data management section **211** records the incomplete registration of the telephone number of the access point and the dialing time schedule (step S72). Thereafter, the server **210** disconnects itself from the telephone line (step S70).

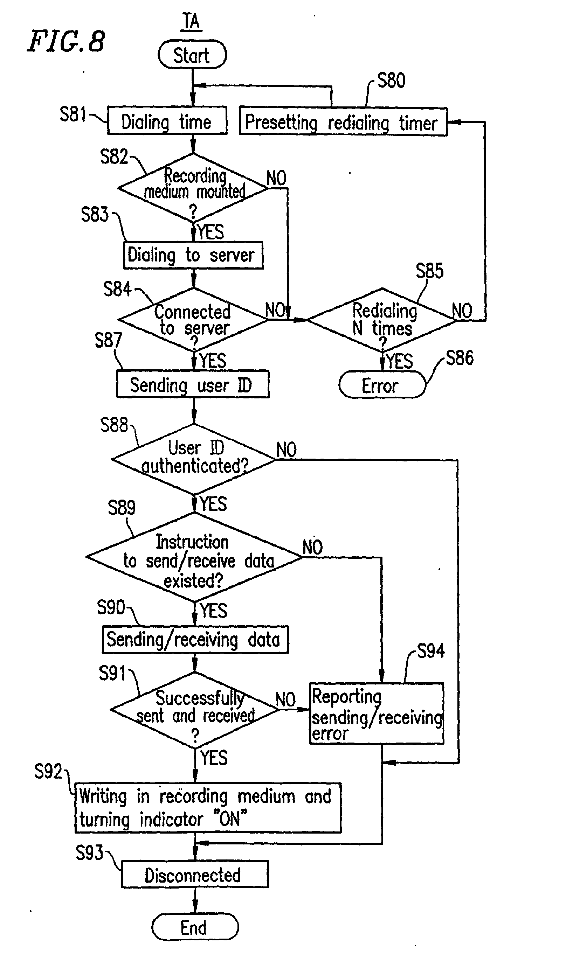

Figure **8** illustrates operations performed by the terminal adapter **220** of the data transfer system **200** for data transfer. The terminal adapter **220** performs the steps S81-S94.

When the telephone number of the closest access point and the dialing time schedule are registered with the terminal adapter **220**, the terminal adapter **220** accesses the server **210** based on the dialing schedule registered therewith, so that data transfer between the terminal adapter **220** and the server **210** is performed.

The dialing time is recorded on the terminal adapter **220** by the first access to the prescribed server **210**. When a timer **221a** provided for the microcomputer **221** determines that the dialing time occurs (step 81), the terminal adapter **220** determines whether or not the recording medium **30** is mounted thereon (step S82).

When the recording medium **30** is not mounted on the terminal adapter **220**, the terminal adapter **220** redials the telephone number of the server **210** N times so as to access the server **210** (step S85). For redialing the telephone number, a time interval for redialing is preset by the timer **221a** of the terminal adapter **220** (step S80). When the dialing time occurs, the terminal adapter **220** redials the telephone number so as to access the server **210.** When the terminal adapter **220** cannot access the server **210** after repeating the redialing N times, the terminal adapter **220** recognizes an error and terminates access to the server **210** (step S86).

When the recording medium **30** is mounted on the terminal adapter **220**, the terminal adapter **220** automatically dials the telephone number which is registered therewith so as to access the server **210** of the access point (step S83).

Next, the terminal adapter **220** determines whether or not the server **210** is accessible (step S84). When the terminal adapter **220** cannot access the server **210,** the terminal adapter **220** redials the telephone number of the server **210** N times so as to access the server **210** (step S85). For redialing the telephone number, a time interval for redialing is preset by the timer **221a** of the terminal adapter **220** (step S80). When the dialing time occurs, the terminal adapter **220** redials the telephone number so as to access the server **210.** When the terminal adapter **220** cannot access the server **210** after repeating the redialing N times, the terminal adapter **220** recognizes an error and terminates access to the server **210** (step S86).

When the terminal adapter **220** determines that the terminal adapter **220** is connected to the server **210** (step S84), the terminal adapter **220** sends a user ID of the recording medium **30** to the server **210** (step S87).

The terminal adapter **220** determines whether or not there is authentication of an user ID by depending on whether an authentication error is sent from the server **210** or not (step S88). When the user ID is authenticated, the terminal adapter **220** determines: (i) whether or not there is an instruction in the recording medium **30** for sending data to the server **210;** and (ii) whether or not there is an instruction in the server **210** for sending data to the terminal adapter **220** (step S89).

When it is determined that there is data to be sent in the recording medium **30** from the terminal adapter **220** to the server **210,** the terminal adapter **220** reads the data from the memory **35** of the recording medium **30,** and that there is data in the server **210** to be sent from the server **210** to the terminal adapter **220,** the data is sent and received. (step S90).

Thereafter, the terminal adapter **220** determines whether or not the data is successfully sent and received (step S91). When the data is successfully sent and received, the terminal adapter **220** writes the received data in the memory **35** of recording medium **30** and turns on an indicator **224** (step S92). Thereafter, the terminal adapter **220** disconnects itself from the telephone line **32** (step S93).

When the data is not successfully sent or received (step S91), a sending/receiving error is reported to the server **210** (step S94). Thereafter, the terminal adapter **220** disconnects itself from the telephone line **32** (step S93).

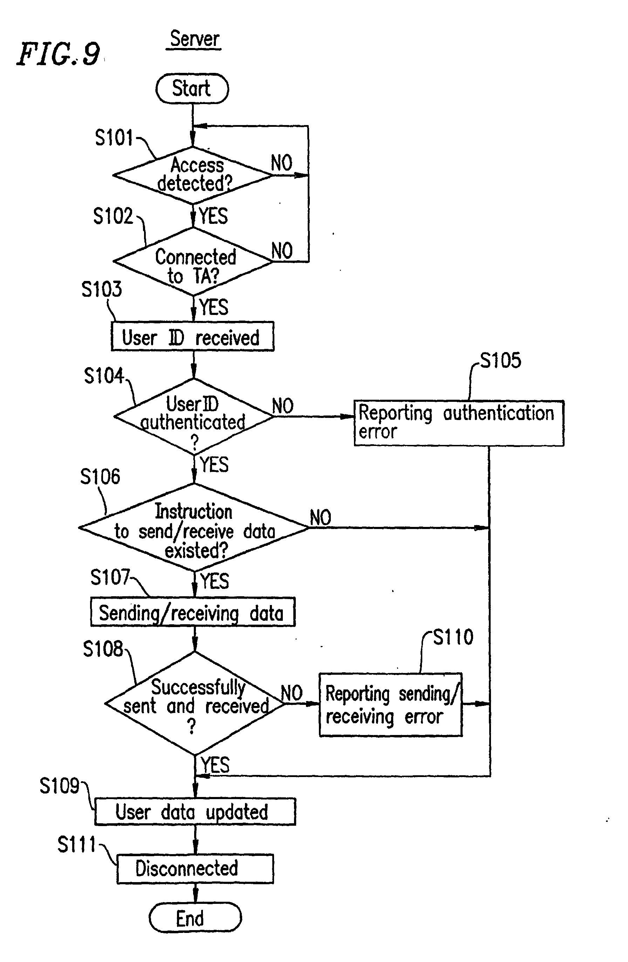

Figure **9** illustrates operations performed by the server **210** of the data transfer system **200** for data transfer. The server **210** performs the steps S101-S111.

The server **210** determines whether or not there is an access by the terminal adapter **220** (step S101). When access is determined, the server **210** determines whether or not the terminal adapter **220** is connected thereto through the telephone line **32** (step S102). When it is determined that the terminal adapter **220** is connected, the server **210** receives auser ID of the recording medium **30** sent from the terminal adapter **220** (step S103) and performs an authentication of the received user ID (step S104).

When the user ID of the terminal adapter **220** is not identical to the user ID which is pre-registered with the user data management section **211** of the server **210**, the server **210** reports an authentication error to the terminal adapter **220** (step S105). The server **210** updates the user data managed by the user data management section **211** and records the time of access by the terminal adapter **220**, a failure in an user ID authentication and the like (step S109).

When the user ID of the terminal adapter **220** is identical to the user ID which is pre-registered with the user data management section **211** of the server **210**, the server **210** determines: (i) whether or not there is an instruction in the server **210** for sending data to the terminal adapter **220**; and (ii) whether or not there is an instruction in the terminal adapter **220** for sending data to the server **210** (step S106). When it is determined that there is data to be sent in the recording medium **30** from the terminal adapter **220** to the server **210**, and that there is data in the server **210** to be sent from the server **210** to the terminal adapter **220**, the data is sent and received. (step S107).

Thereafter, the server **210** determines whether or not the data is successfully sent and received (step S108). When the data is successfully sent and received, the server **210** updates the user data managed by the user data management section **211** and records the time of access by the terminal adapter **220**, a success in the sending/receiving of the data and the like on the user ID (step S109).

When the data is not successfully sent or received, the server **210** reports a sending/receiving error to the terminal adapter **220** (step S110). The server **210** updates the user data managed by the user data management section **211** and records the time of access to the prescribed terminal adapter **220,** a failure in the sending/receiving of the data and the like (step S109).

When the user data of the user data management section **211** is updated, the terminal adapter **220** disconnects itself from the telephone line **32** (step S111) and the server **210** ends the control operation.

As in the case of the data transfer system **100**, the sending/receiving of data is only instructed by mounting the recording medium **30** on the terminal adapter **220** in the data transfer system **200**. Therefore, the data is automatically sent and received between the server **210** and the terminal adapter **220** without requiring a user's operation of connecting the terminal adapter **220** to the telephone line **32**.

In Example 2, the dialing time schedule of the terminal adapter **220** is distributed and preset by the first access of the terminal adapter **220** to the prescribed server **210**. The dialing time schedule may be preset on the memory **222** of the terminal adapter **220** at the time of the shipping or sale of the terminal adapter **220**. A plurality of different dialing times may be automatically preset for each terminal adapter **220** by providing a function for randomly presetting the dialing time for each terminal adapter **220.**

The dialing time may be appropriately changed. As described above, the dialing time of the terminal adapter **220** may be spread in a time slot when traffic to the server **210** is low. The number of dialing times may be limited to, for example, twice a day.

### (Example 3)

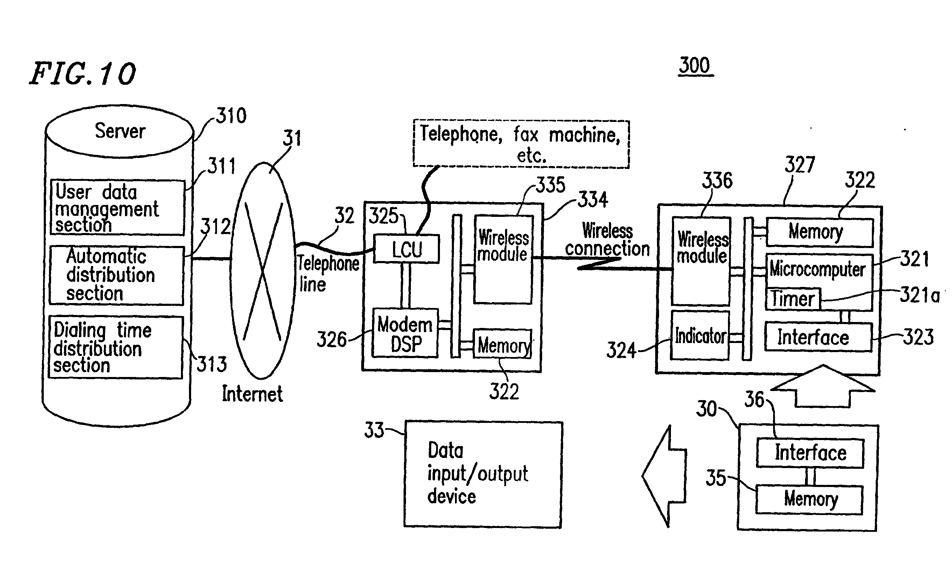

Figure **10** illustrates a configuration of a data transfer system **300** according to Example 3 of the present invention. The configuration of the data transfer system **300** is the same as that of the data transfer system **200** of Example 2 except that wireless terminal adapters **327** and a wireless connection adapter unit **334** are provided in the data transfer system **300** instead of the terminal adapter **220**.

Each wireless terminal adapter **327** includes a microcomputer **321**, a timer **321a**, a memory **322**, an interface **323**, an indicator **324**, and a wireless module **336.**

The wireless connection adapter unit **334** includes a memory **322,** an LCU **325,** a modem (DSP) **326,** and a wireless module **335.**

The respective functions of the microcomputer **321,** the timer **321a**, the memory **322**, the interface **323**, the indicator **324**, the LCU **325**, and the modem (DSP) **326**, wireless connection adapter unit **334**, the memory **322**, the LCU **325** are the same as those of the microcomputer **221**, the timer **221a,** the memory **222,** the interface **223,** the indicator **224,** the LCU **225,** and the modem (DSP) **226** of Example 2.

The wireless module **335** and the wireless module **336** are connected to each other through a wireless connection.

The connection between the wireless module **335** and the wireless module **336** is realized by using bluetooth, IR, wireless LAN, IEEE 1394 Wireless, or the like.
Hereinafter, automatic dialing to the server **310** performed by the terminal adapters **327** in the data transfer system **300** having such a configuration will be described.

In the data transfer system **300** according to Example 3 of the present invention, when the wireless terminal adapter **327** initially accesses the server **310,** a dialing time schedule is sent from the server **310** to the wireless terminal adapter **327** and registered there with. When the dialing time schedule is registered, data is transferred between the server **310** and the wireless terminal adapter **327**.

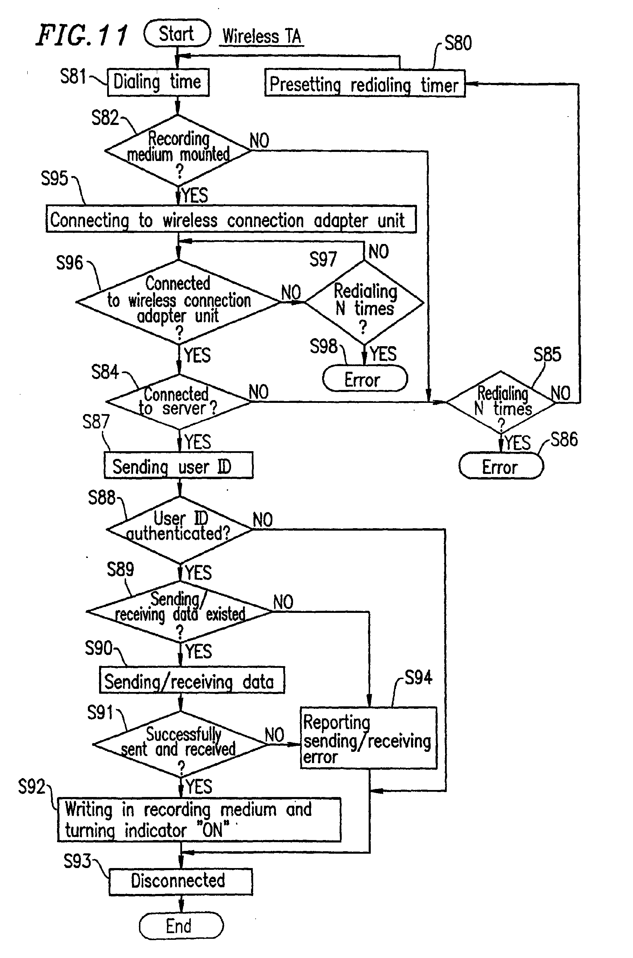

Figure **11** illustrates operations performed by the terminal adapter **327** of the data transfer system **300** for data transfer. The wireless terminal adapter **327** operates steps S80-98. The data transfer operations performed by the wireless terminal adapter **327** are the same as those performed by the terminal adapter **220** shown in Figure **8** except that steps S95-98 are performed by the wireless terminal adapter **327** in the data transfer system **300** instead of step S83 shown in Figure **8.**

Hereinafter, operations of the wireless terminal adapter **327** at steps S95-98 are specifically described.

The wireless terminal adapter **327** determines whether or not the recording medium **30** is mounted thereon (step S82). When the recording medium **30** is mounted on the wireless terminal adapter **327,** the wireless module **336** of the wireless terminal adapter **327** is connected to the wireless module **335** of the wireless connection adapter unit **334** through a wireless connection (step S95). Next, the wireless terminal adapter **327** determines whether or not the wireless module **335** is connected to the wireless module **336** through wireless connection (step S96). The wireless connection is established between the wireless module **335** and the wireless module **336**, and the wireless terminal adapter **327** determines whether or not the server **310** is accessible (step S84).

When the wireless connection is not established, the wireless terminal adapter **327** attempts to connect the wireless module **335** to the wireless module **336** a prescribed numbers (N) of times (step S97). In the case where the wireless connection of the wireless module **335** to the wireless module **336** is not established after N times, the wireless terminal adapter **327** recognizes the wireless connection of the wireless module **335** to the wireless module **336** as an error, and ends the connection control (step S98).

As described above, according to the data transfer system **300** of Example 3, the wireless terminal adapter **327** is provided with a wireless communication function, so that a user of the data transfer system **300** is provided with the service of the data transfer system anywhere in a home. Moreover, an indicator of the wireless terminal adapter allows the user to determine whether or not the data is sent and received anywhere within a home.

The wireless terminal adapter **327** is provided with the wireless communication function, therefore, in the case where the wireless terminal adapter **327** is used in the data transfer system **100** according to Example 1 or the data transfer system **200** according to Example 2, the wireless terminal adapter **327** can determine instructions in the wireless terminal adapter **327** for sending data to the server **310** or instructions in the server **310** for sending data to the terminal adapter **327** through wireless connection, thereby sending/receiving the data to and from the server **310**.

The present invention is not limited to the configurations described in Examples 1-3. Any configuration for sending/receiving data based on mounting/dismounting of the recording medium **30** on/from the terminal adapter **120**, the terminal adapter **220**, or the wireless terminal adapter **327** may be used.

Moreover, procedures of data transform operations of the present invention may be recorded on a recording medium as a program or may be supplied to a server or terminal adapter through a network.

### INDUSTRIAL APPLICABILITY

As described above, the data transfer system of the present invention can transfer data by using a mountable recording medium without sending/receiving operations performed by a user of a terminal adapter. Therefore, even a child, a user who is not accustomed to operate an electronic device, or the like can readily send and receive data. Particularly, data is sent and received only when the sending/receiving of data is instructed, so that even a child, for example, can use the data transfer system of the present invention without difficulty. Moreover, since the time for sending/receiving the data can be preset, traffic to and from the server can be equalized.

When the data transfer system of the present invention includes a wireless terminal adapter having a wireless communication function, a user is provided with the service of the data transform system anywhere within a home. In such a case, an indicator of the wireless terminal adapter allows the user to determine whether or not the data is sent and received anywhere within a home.

The server and terminal adapter of the present invention are suitable for the above-described data transfer system. Particularly, the terminal adapter is configured to record data on a recording medium which is mountable on the terminal adapter without including specific functions, such as viewing, listening, etc., of received data, and thus an extremely simple configuration can be achieved.

## Claims

1. A data transfer system comprising a server and a terminal adapter capable of mutually transferring data to each other, wherein the server accesses the terminal adapter at a prescribed dialing time, and determines an instruction for sending first data to the terminal adapter and an instruction for receiving second data from the terminal adapter so as to send the first data to the terminal adapter and receive the second data from the terminal adapter.

2. A data transfer system according to claim 1, wherein the data transfer system allows a recording medium to be mountable thereon, and the instruction for sending the first data and the instruction for receiving the second data are issued based on whether the recording medium is mounted on the data transfer system or not.

3. A data transfer system according to claim 1, wherein the dialing time is preset based on a data traffic of the server.

4. A data transfer system comprising a server and a plurality of terminal adapters capable of transferring data to each other, wherein the server accesses each of the plurality of terminal adapters at a different dialing time preset for each of the plurality of terminal adapters, and determines an instruction for sending first data to each of the plurality of terminal adapters and an instruction for receiving second data from each of the plurality of terminal adapters so as to send the first data to each of the plurality of terminal adapters and receive the second data from each of the terminal adapters.

5. A data transfer system comprising a server and a terminal adapter capable of mutually transferring data to each other, wherein the terminal adapter accesses the server at a preset dialing time, and determines an instruction for sending first data to the server and an instruction for receiving second data from the server so as to send the first data to the server and receive the second data from the server.

6. A data transfer system according to claim 5, wherein the terminal adapter has a wireless communication function, and determines, through the wireless communication, an instruction for sending first data to the server and an instruction for receiving second data from the server so as to send the first data to the server and receive the second data from the server.

7. A terminal adapter capable of mutually transferring data to and from a server and allowing a recording medium to be mountable thereon, wherein the terminal adapter accesses the server at a preset dialing time based on whether the recording medium is mounted on the terminal adapter or not, and determines an instruction for sending first data to the server and an instruction for receiving second data from the server so as to send the first data to the server and receive the second data from the server.

8. A terminal adapter according to claim 7, wherein the terminal adapter has a wireless communication function, and determines, through the wireless communication, an instruction for sending first data to the server and an instruction for receiving second data from the server so as to send the first data to the server and receive the second data from the server.

9. A terminal adapter according to claim 7, wherein a dialing time and an address of the server are preset in the terminal adapter, and the terminal adapter accesses the server based on the preset dialing time and the preset address of the server.

10. A terminal adapter according to claim 7, wherein a dialing time and an address of the server are preset in the recording medium, and the terminal adapter accesses the server based on the preset dialing time and the preset address of the server.

11. A terminal adapter according to claim 7, wherein the dialing time is preset by accessing the server.

12. A terminal adapter according to claim 11, wherein an address of the server is preset so that the terminal adapter automatically accesses the server in which the dialing time is preset.

13. A server capable of mutually transferring data to and from a terminal adapter, wherein the server accesses the terminal adapter at a preset dialing time, and determines an instruction for sending first data to the terminal adapter and an instruction for receiving second data from the terminal adapter so as to send the first data to the terminal adapter and receive the second data from the terminal adapter.
